# EUROPEAN PATENT APPLICATION

(11) **EP 1 316 879 A2**
(43) Date of publication of application: **04.06.2003**
(21) Application number: 02258191.2
(22) Date of filing: 28.11.2002
(51) Int. Cl.: G06F 3/033

(54) **Dynamic tree structure**

(30) Priority: 01.12.2001 US 8470
(71) Applicant: Instinet Inc., New York, NY 10036 (US)
(72) Inventor: Tiefenbrun, Natan E., New York, NY 10023 (US); Brain, Steven F., Amersham, Bucks HP7 9HE (GB); Howard, Ian G., Highgate, London N6 5SU (GB)
(74) Representative: Haley, Stephen

(57) **Abstract**

A method is provided for creating a tree having a plurality of nodes and a plurality of objects associated therewith, each object having a plurality of attributes. The method includes the steps of (1) selecting, by a user, the attributes in accordance with the user's prefercnce, and (2) creating the tree in accordance with the selected attributes.

## Description

The present invention relates to a dynamic tree structure display and user interface that allows a user to organize, visualize, navigate around, select a subset of, and operate upon a collection of arbitrary objects in a database based on attributes of those objects.

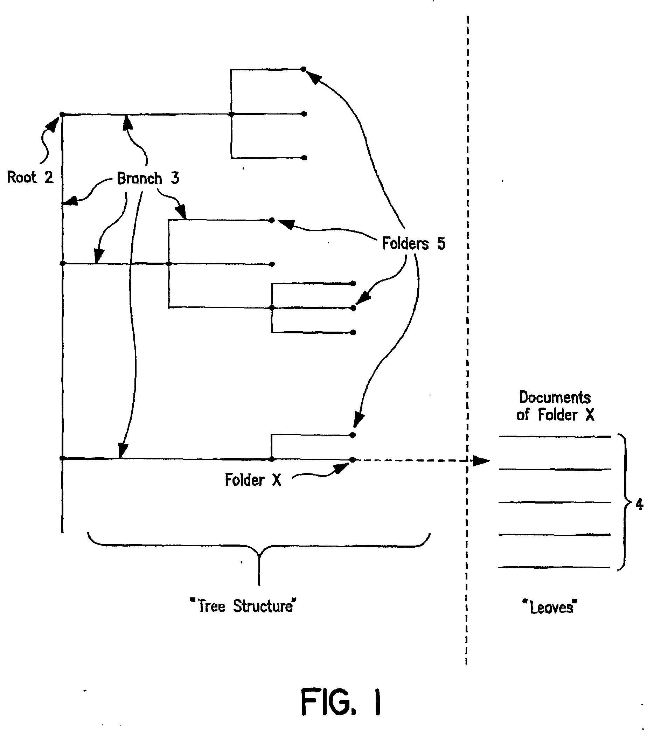

In a standard navigation aid for a computer operating system (for example, Microsoft's Explorer), folders (or directories) are created that contain one or more objects, where an object can either be another folder (or directory) or a file of some sort (an application, a document, etc.). This system is modeled on a real-world filing cabinet in which folders contain documents and/or other folders. On computers, a directory hierarchy, or tree structure, is created, where folders may "branch" off other folders, based on the fact that they are stored inside that folder, with each folder representing a "node" in the tree. It is possible to select and examine the contents of a single folder, and any objects (files or folders) contained therein can be considered as "leaves" on the tree, and are represented in another section of the computer screen (commonly a linked window in the user interface). The tree hierarchy is always constructed based on the location of objects (or directory/folder within which objects are stored). The tree is updated when folders are added, deleted or moved explicitly by the user. The highest node of the tree (or root) is typically the computer's home directory within which all other objects are stored. This interface is considerably more convenient than searching through physical filing cabinets. An example of such a tree structure is shown in attached Fig. 1. Referring to Fig. 1, a conventional tree structure 1 with a main trunk 2 (the tree "root") may be displayed vertically on a visual display, a branch 3 connects to the main trunk 2, a folder 5 (a "node") connects to the branch 3. In a separate display, for example, a window adjoining the tree structure as shown in Fig. 1, associated with a specified folder "X" are displayed. Each folder or file has its own attributes, for example, its name, date created, author, security, etc. Having selected a node from the tree, the contents of that node are displayed in a separate area (hereinafter, the "detail" or "content" area) and the attributes of those contents maybe used to selectively sort and display those objects located at the particular node of the tree. For example, the files may be sorted and displayed by when they were created, or alphabetically by name, or by level of security protection. However, regardless of the attributes chosen for file sorting/displaying, the tree structure does not change. That is, the branches between each of the folders and files remain fixed because the files exist in only one folder, and the only attribute being used in the construction of the tree is the "location" of objects within the directory structure. The interface allows the user to expand and collapse nodes of the tree for viewing purposes only, but the underlying tree structure is not changed by this interaction.
While the tree representation commonly used was considered a valuable enhancement when introduced (originally by Apple) and facilitates navigation to some extent, it has some limitations:
- Users must still create and enforce their own organizational and naming system, taking care to save files in particular folders, or they will subsequently have difficulty finding those files. The difficulty arises because the user can only view the contents of a single folder at a time, and so finding documents involves sequentially examining the contents of many nodes of the tree. This is partially mitigated by searching tools that allow the user to search across the tree, but these tools are typically time consuming and inefficient to use. This need for users to enforce their own organizational and naming system greatly complicates collaboration, and confusion about where to find particular files is common in a multi-user environment (as is also the case with multiple users of a physical filing cabinet with poor organization).
- The restriction to viewing the contents of one folder at a time hampers attempts to efficiently select and operate upon (edit, delete, move) files that may be stored in different folders.

The defining characteristics of existing art are:
- A single attribute is used to build the tree (e.g., file location).
- Objects arc associated with only one node of the trec.
- The user can only select a single node of the tree at a time in order to examine the contents.

Another approach to the organization of objects is that taken by databases (and relational databases). The objects are stored as a long list without any inherent organizational hierarchy. The user can, however, specify relationships between objects based on their attributes, and run "queries" which returns a static snapshot (or view) of the objects that satisfy specified attribute criteria. This approach allows the users great flexibility in specifying relationships and building queries or views onto the objects. However, there are limitations:
- Unlike a tree structure, there is less visual support for visualizing, navigating and organizing the data, and it is harder for the user to understand the macro-characteristics of the objects in the database.
- The queries or views return static snapshots of the objects, which do not change as objects are added, removed or modified.
There is a need for an approach which combines the benefits of a database approach with the benefits of a hierarchical tree approach.

Accordingly, to overcome the drawbacks in the prior art, it is desirable to have a dynamic tree structure with one or more of the following aspects:
· The tree structure is constructed using multiple attributes of the objects, and allows a user to select and, reorganize as necessary, the attribute hierarchy based on his or her specific needs.
· Objects are not associated with only one node of the tree structure, but each successive node of the tree structure represents a further subdivision of the universe of objects. In this structure, the set of objects associated with a particular node would be the superset of objects associated with lower nodes in the tree. Accordingly, the top node (or root) of the tree would "contain" all objects in the universe, while each lower node successively applies a filter and displays only those objects that were contained in the higher node that have an attribute value that matches the node's attribute value.
· The tree structure is dynamically updated to reflect changes to the underlying objects, such that as objects are added or modified they are automatically associated with the correct nodes of the tree, and such that nodes of the tree are dynamically added and removed to reflect changes to the underlying universe of objects.
· The user can simultaneously select more than one node of the tree and subsequently select from and operate upon the objects associated with all selected nodes.
· Both inherent attributes of objects and "derived" or "calculated' attributes of objects can be used in construction of the tree.

In the Drawings;

FIG. 1 is a diagram of a conventional tree structure.

FIGs. 2A-2C are diagrams that show attributes of a financial trading display and two tree structures that use different attributes based on the user's specific interests in accordance with the present invention.

FIGs. 3A-3C are visual displays of a navigation panel in accordance with the present invention.

FTG. 4 is a visual display of the selected and available attributes in accordance with the present invention.

FIG. 5 is a visual display for a filter in accordance with the present invention.

FIG. 6 is a visual display for a sorter in accordance with the present invention.

FTGs. 7A-7C are visual displays of examples of a navigation tree structure, as set up by a user, in accordance with the present invention.

FIG. 8 is a diagram that shows how the server constructs the navigation initially, in accordance with the present invention.

FIG. 9 is a diagram that shows how the server maintains the tree structure as the data universe changes in accordance with the present invention.

FIG. 10 is a diagram that shows the update process in the case where an object is added in accordance with the present invention.

FIG. 11 is a diagram that shows the internal design of how a navigation source is constructed and what interface it expresses to the user applications, in accordance with the present invention.

For this application, an "object" is defined as the fundamental component within a specific system and an "attribute" of an object is a characteristic of an object as understood by one of ordinary skill in the art. For example, for a financial trading system, an "order" is the object, i.e., the fundamental component of a financial trading system, while "buy" or "sell" is an attribute or characteristic of the order.

In the system of the present invention, objects exist in a common "leaf" pool, independent of one another (a database). That is, the objects do not exist in the equivalent of "computer folders", nor are they explicitly interconnected by "branches". Each user is then free to build his or her own tree structure, based on attributes that the user selects. Thus, each user may create his or her own tree structure using the attributes lie or she desires, and in a desired priority. In other words, each user can dynamically build a customized tree structure from the objects in the common pool, as driven by the user-specified selection of attributes. Similarly, any number of default tree structures commonly used by a user can be specified and saved by that user. In addition, the tree structure is dynamically updated based on real-time information that changes the tree structure, for example, as objects such as orders in a financial trading system are entered into the system or as the attributes related to the orders in the system change.

A dynamic tree structure allows a user to organize, visualize, navigate around, select a subset of, and operate upon a set of objects in a database based on attributes of the objects. The user specifies the attributes the user would like to use in order to generate a desired tree structure, and the present invention subsequently builds a hierarchical tree structure by examining the attributes of the objects in the database, and filtering the database according to the values of those attributes in order to associate objects to nodes. Each node of the tree structure designates all those objects whose attributes match the current node and its parents' nodes within the tree. This type of tree structure is an intuitive and efficient way of allowing a user to organize, navigate, select a sub-set of and operate upon a collection of arbitrary objects in a database based on attributes of those objects. It is more efficient, for example, than the tree structure commonly used in certain "file manager" fixed-tree structures that are commonly used in computer operating systems. The enhanced efficiency derives from the fact that the node of a tree structure of the present invention includes not only the objects that match a particular node, but also the combined set of all the objects that appear in the lower nodes of the tree structure. The user does not need to scroll down to the end of the tree structure in order to find the objects they are looking for, as it will automatically also be visible in higher nodes. The ability for the user of the present invention to quickly configure the choice, and order of attributes, used to organize the data creates what is referred to herein as a "dynamic tree structure." In addition, the ability for the user to alternate between different tree structures, facilitates more efficient and speedy organization, navigation, selection and operating upon a collection of arbitrary objects in a database based on attributes of those objects. It also allows different users within the context of a multi-user environment to either share a means of organizing the information in the database and thus, allows the different users to collaborate more effectively, and, alternatively, to have a different means of organizing the objects in the database to facilitate different tasks or responsibilities.

In the description provided above and in the figures described below, the present invention is described in a manner relating to a financial trading system, where the object was determined to be an order, and certain attributes of the order were determined to be "buy" or "sell", price, etc. However, the present invention is not limited for use in only a financial trading system and can be utilized in many other systems. For example, if a database contained a list of products for sale in a supermarket, the system of the present invention would understand that all the objects related to the supermarket have a certain number of *inherent* attributes related to the objects such as product name, batch number, significant ingredient, sell-by date, price, supplier, and section in the supermarket. In addition to the inherent attributes associated with each object, there would also be a number of *calculated* or *derived* attributes associated with each object. The calculated or derived attributes may include days-until-sell-by-date, price-band selected from ($0-$1, $1-$3, $3-$5, $5-$10, $10-$50, $50+), sales-volume-band selected from (0-500, 501-2000, 2001-5000, 5001-20000, 20000-100000, 100000+), supermarket section manager, and the supplier's manager. The user can then choose which attributes (inherent or derived) related to the objects to operate upon. Through an interface, the user selects a number of attributes and prioritizes them. Once this is done, the system constructs the navigation tree structure based upon the user's selection of attributes related to the objects. The tree structure will be continuously updated as the objects in the database changes (through the addition or removal of objects in the database) or as attributes of certain objects change as a result of, for example, as prices and sales volume of an object change. The ease with which the user can create multiple navigation tree structures, and alternate between them, facilitates efficient and speedy operation.

We provide below several more examples of how the dynamic tree structure of the present invention can be used in a supermarket, albeit different departments within the supermarket. A user (for purposes of this example only, we refer to this user as the "first user") of the present invention that is responsible for managing supplies and orders would likely construct two dynamic tree structures where the objects would be the supplies and order, and the attributes related to these two objects may be days until sell-by, product name, batch number, supplier, and sales volume. A first tree structure would easily allow the first user to identify which orders arc approaching their sell-by date, and within this set, identify the various products, batch numbers and suppliers to facilitate ordering. A second tree structure may be set up by the first user to allow the first user, when, e.g., talking to a particular supplier, to identify the variety of products that will need to be ordered and the likely dates and volumes of each order. Another user (for purposes of this example only, we refer to this user as the "second user") responsible for managing a particular section in the supermarket would likely construct dynamic tree structures that include attributes such as section, category, and volume band. However, the supervisors of the above first and second user would likely use a different tree structure, in which attributes such as supermarket section manager or supplier manager would be used. These examples are intended to show that an infinite amount of tree structures can be used by individuals with different levels of responsibility and concerns in a supermarket based on a user's specific needs. The dynamic tree structure would be a valuable tool in any environment in which there is a large number of objects in a database, and different users with different preferences for organizing and navigating this data. Potential uses would include but not be limited to:
· An alternative "Explorer"' application for organizing files on a computer drive, perhaps by a tree constructed by Type (Document, Spreadsheet, Application), Date, Author, Size, Keywords, Location, etc.
· In a bookshop database, where employees or customers might want to navigate books in the database by some combination of Author, Publisher, Date of
Publication, Copies Sold, Subject, Category
(Fiction/Biography/History/Language etc.), Reviewer Ratings, Awards Nominated etc.

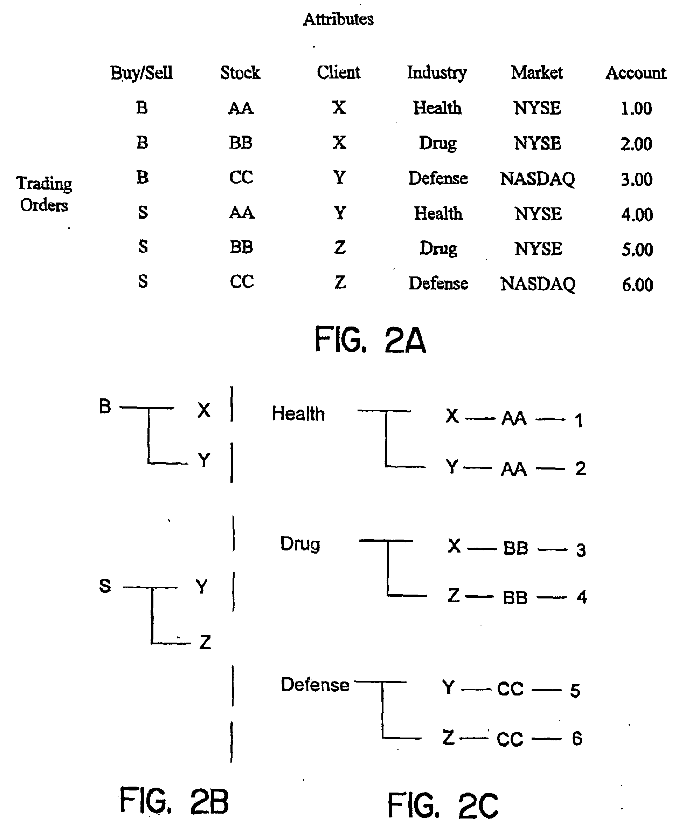

Referring to FIG. 2A, a visual display includes several columns 6 of attributes typically associated with an object in a financial trading system such as an order, and such attributes related to an order include "Buy" or "Sell", type of stock or other financial instrument, client, type of industry, specific market, and account number. FIG. 2B and FIG. 2C are tree structures that may be created by a user based on the user's specific interests; for example, in FIG. 2B, a stock broker may want to view a tree structure with a first column from left to right that displays a Buy or Sell attribute, and then a second column that displays a client attribute, thus the stock broker has only selected two attributes to operate upon. In FIG. 2C, a bond trader may want to view a tree structure with a first column from left to right that displays a type of industry attribute, a second column that displays a client, a third column that displays a stock attribute and a fourth column that displays an account number attribute, thus the bond trader has selected four attributes to operate upon.

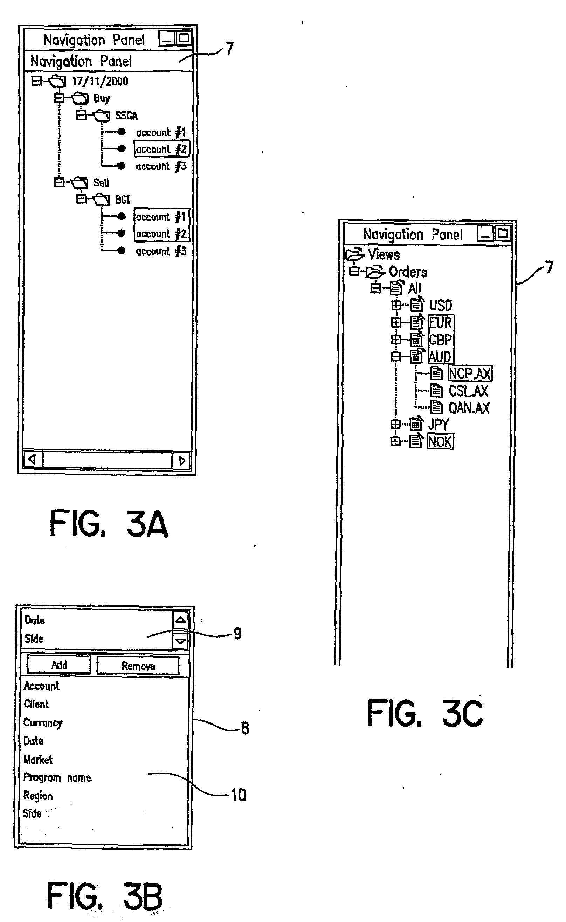

Referring to FIG. 3A, a visual display of a navigation panel 7 which shows the attributes selected by the user relating to the object of order in this illustration, and shows that the user has prioritized the attributes in the tree structure in a Buy or Sell, client (Client A and Client B), and account number format. Moreover, the present invention allows a user to select not just one node of the tree (and see all the objects that are designated by that node), but to select multiple nodes simultaneously and at different levels of the tree hierarchy. This feature is shown in Figure 3A, which shows that a user may select nodes representing account numbers 1 and 2 at the same time. Similarly, as shown in Figure 3C, nodes for "EUR", "GBP", "AUD", "NCPAX", and "NOK" have been selected at the same time by the user. Referring to FIG. 3B, a visual display of the list of attributes related to the object of order that may be selected by the user is shown. FIG. 3B is a visual display of a pop-up menu 8 that will appear visually when the user makes a request by, e.g., clicking on a right mouse button. The top section **9** of the pop-up menu **8** includes the attributes selected by the user based on the user's prioritization of attributes. The bottom section **10** of the pop-up menu **8** includes the attributes not selected by the user to use in the user's desired tree structure, i.e., those attributes that remain available to the user for addition to the tree structure at a later time, if necessary.

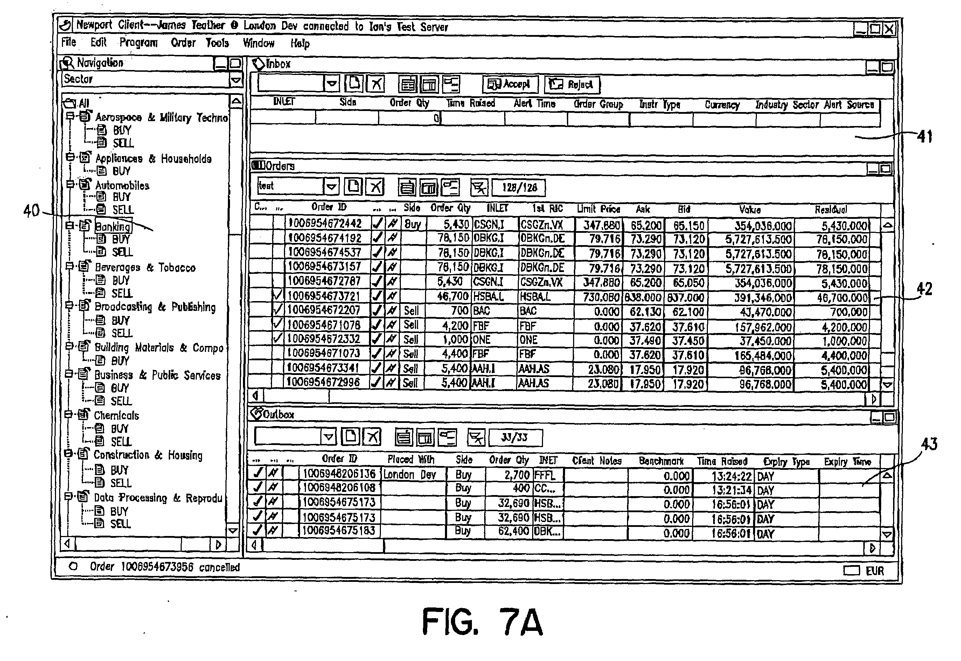

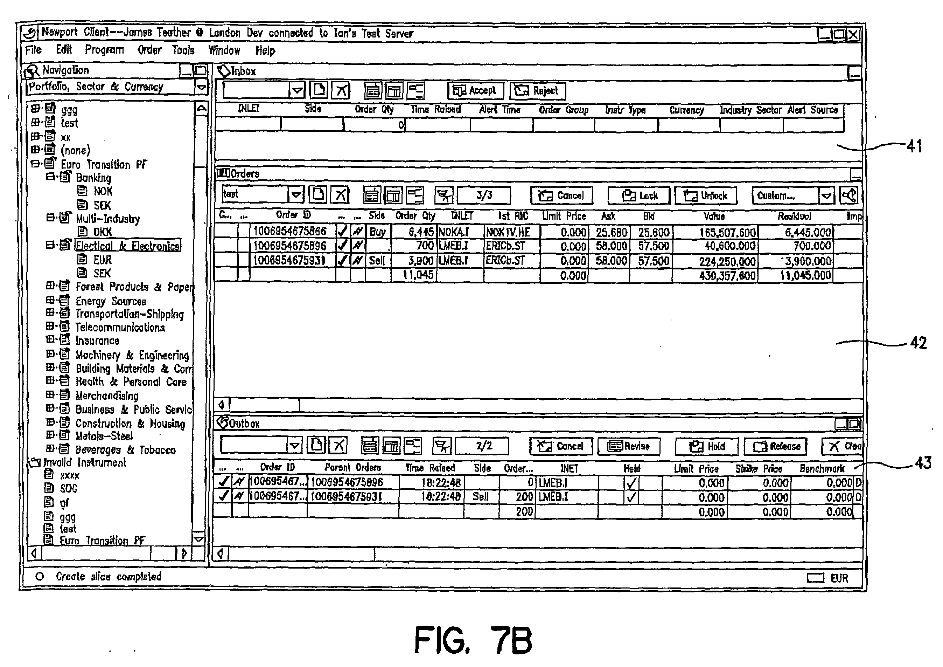

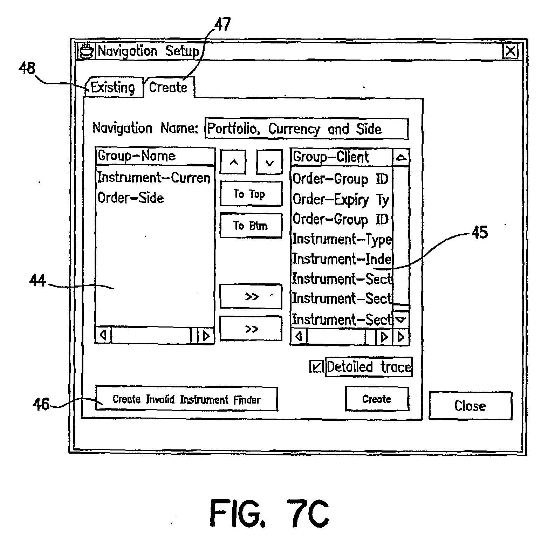

Referring to FIGs. 7A-7C, a visual display configuration of a navigation tree structure in the context of a user interface for trading securities, as set up by a user, is shown. Figure 7A is the visual display configuration for a navigation panel that shows in the left section **40** all the trading orders based on a type of industry attribute such as Banking, which has been selected, for this example, by the user. Each of the content (or detail) windows **41, 42,** and **43** represent the contents of the Banking node of the tree to which the user has subsequently applied different filtering, sorting, and grouping operations (hence the contents appear to be different). The number of content windows (normally one or more) is left to the discretion of the user. Window **41** has been filtered so it has no contents, while windows **42** and **43** have been filtered to produce the displayed objects. Despite the fact that the windows display filtered contents, each window is a view of the identical node. The user is able to apply filtering, sorting, and grouping to the selection of attributes for display in each content window, and can quickly adjust the filtering, sorting and grouping settings or switch between saved user preferences for these settings. Thus, further enhancing the flexibility of the navigation tool, because by merely selecting one node of the tree, the user is presented with multiple, filtered views of the objects associated with that node. The windows are respectively the "Inbox" **41,** the "Orders" **42,** and "Outbox" **43.** The "Orders" **42** section shows, for this example, all the "Buys" and "Sells" related to the Banking trading orders and the attributes related to these specific trading orders such as the trading order identification number, trading order quantity, and valuation-related information such as the "Ask" and "Bid" price. Figure 7B is the visual display configuration for a navigation panel that is similar to Figure 7A, but also includes an invalid instrument node, as set up by the user, in the left section **40.** If, for example, navigation criteria relies on an attribute such as the order identification number, and a certain order does not have a valid identification number, than the invalid order will appear in the invalid instrument navigation tree structure, as set up by the user. Figure 7C is the visual display for creating and modifying the selection and priority of attributes used in tree construction, with a set of available attributes that are shown in the left list box (those already selected by the user) **44** and the right list box (those not yet selected by the user) **45.** The user can move attributes between the two list boxes and then name the tree configuration, before making it available, by clicking on the "Create" button **47**. By clicking on the "Existing" button **48**, the system lists the navigation trees that are already available in the system; if no longer required, these navigation trees can be deleted. In addition, an invalid instrument finder **46** identifies those attributes that do not correspond with the navigation criteria.

FTGs. 4, 5, and 6 represent examples of interface tools by which the user uses to perform filtering, grouping, and sorting, and the selection of attributes for display in the various object window views, for example, windows **41, 42,** and **43.**

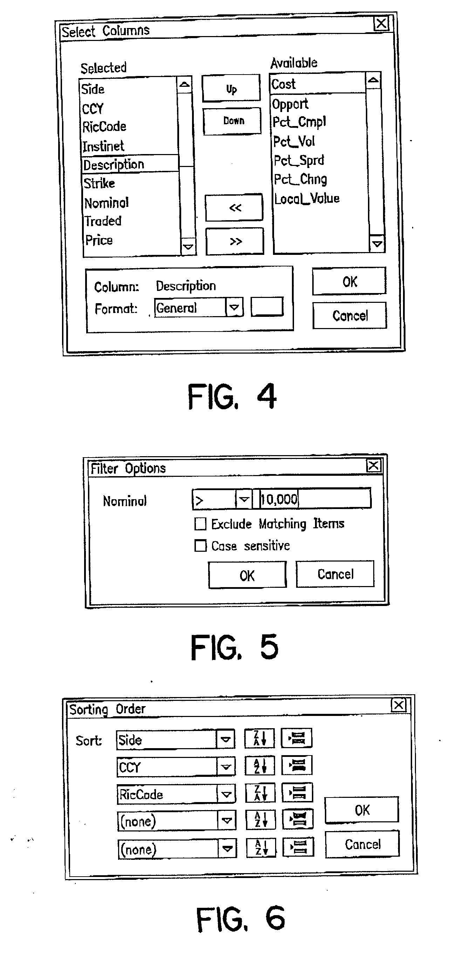

FIG. 4 is a visual display for configuring the display of object attributes in the content window. It allows the user to determine which columns are displayed and in what order.

FIG. 5 is a visual display for configuring the filters that are applied to further constrain the objects shown in the contents (detail) window. This is done by specifying conditions that objects must meet (based on the values of particular attributes).

FIG. 6 is a visual display for configuring the sorting and grouping (facilitating subtotals) of the displayed objects in the content (detail) windows. The user can select which columns (attributes) are used to sort the objects for display and whether subtotals should be shown at different levels of the sort.

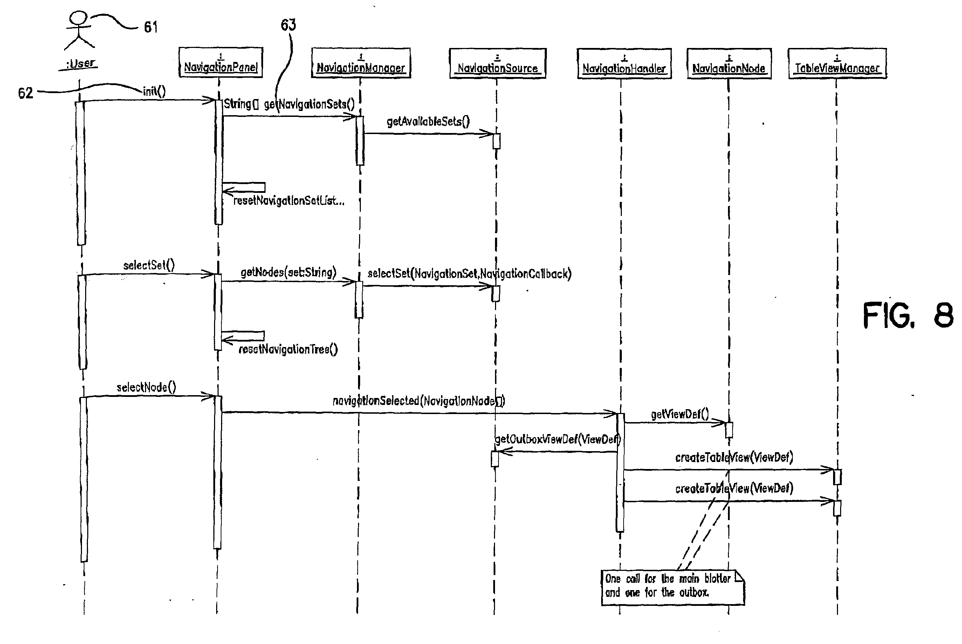

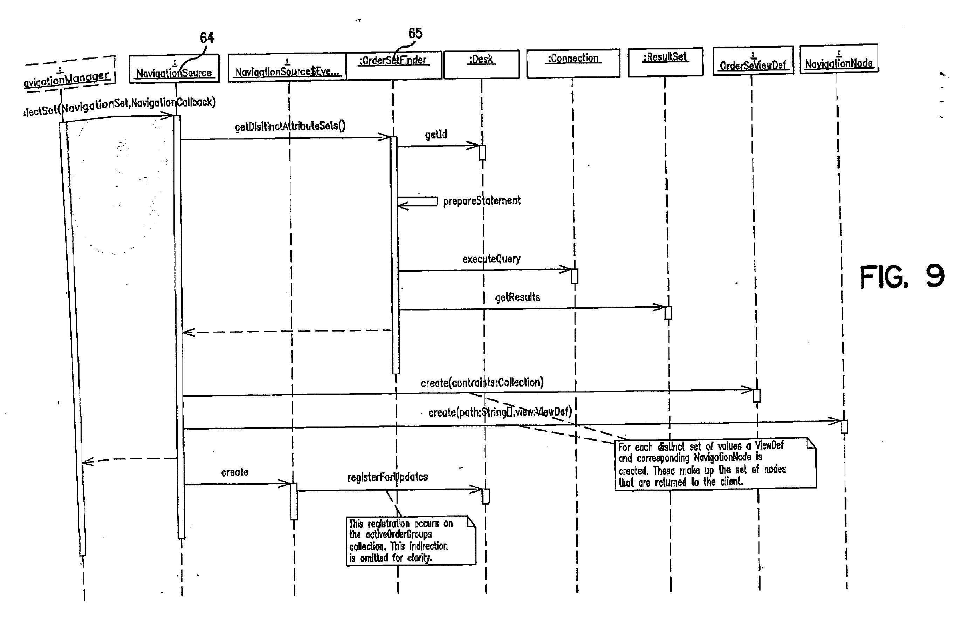

Referring to FIGs. 8 and 9, these diagrams show how the server constructs the navigation initially, and then how it maintains the tree as the data universe changes. Simply put, for construction purposes, the server gathers the distinct set of attributes for all objects in the universe in a single query, while at run-time the server interrogates the objects dynamically, as they are added The diagram in FIG. 8 shows the process by which the client communicates with the server. The process can be summarized as follows:
1. The user **61** applications requests a list of available navigations.
2. The user **61** selects one of the navigation trees (by using the box at the top of the navigation panel) As part of this process, the user registers to receive notification when the tree structure changes.
3. The user **61** selects one of the nodes in the navigation tree to view the data in a main blotter.

The available navigations are stored on the server and can be maintained using the administration panel as illustrated in FIG. 8. These tree configurations may be shared between users on a desk, thus ensuring consistency across a tight-knit user group.

Referring to FIG. 9, the diagram relates to how the system selects a navigation set. The bulk of the work at initialization is done when a navigation set is selected. The diagram shows how the navigation source **64**, which presents the interface to the user applications, makes use of a navigation finder **65** object to query the universe. The navigation finder **65** implements an interface that is fully data driven, which means that the navigation infrastructure can be potentially used to construct trees for any type of object, with any type of attribute. In the examples provided above, the system navigates from a universe of order objects, but the system could equally be browsing client objects, instrument objects, or any other object in the system that the user wants to view. The concrete instance is the order set finder, which makes use of the underlying database to build up the initial set of nodes and then uses the event framework to listen for object additions, deletions and updates in real time. By using this approach, the initial query can be optimized at the database level and in real time, all the processing will continue to process by using the data already in memory. In addition, large sets of data can be manipulated in real time within acceptable performance parameters. Once a tree has been created it is stored in memory. The navigation finder **65** subscribes to any real-time updates on the underlying data set, that is, any events that are generated are analyzed to determine if the changes will effect the structure of the tree. If they do, the navigation source **64** is notified, which in turn calls back to the user which is responsible for updating the display. In the case where objects are added or removed, the navigation finder **65** also notifies the table view to ensure that the appropriate rows are made visible (or removed) in the main panel. The complexity in this process is due to the number of subscriptions that the navigation finder **65** must maintain and the logic required to back track from the object modification to the tree structure change. The system manages this complexity by distributing the responsibility between different classes, and real time performance is preserved by considering several events in just one call.

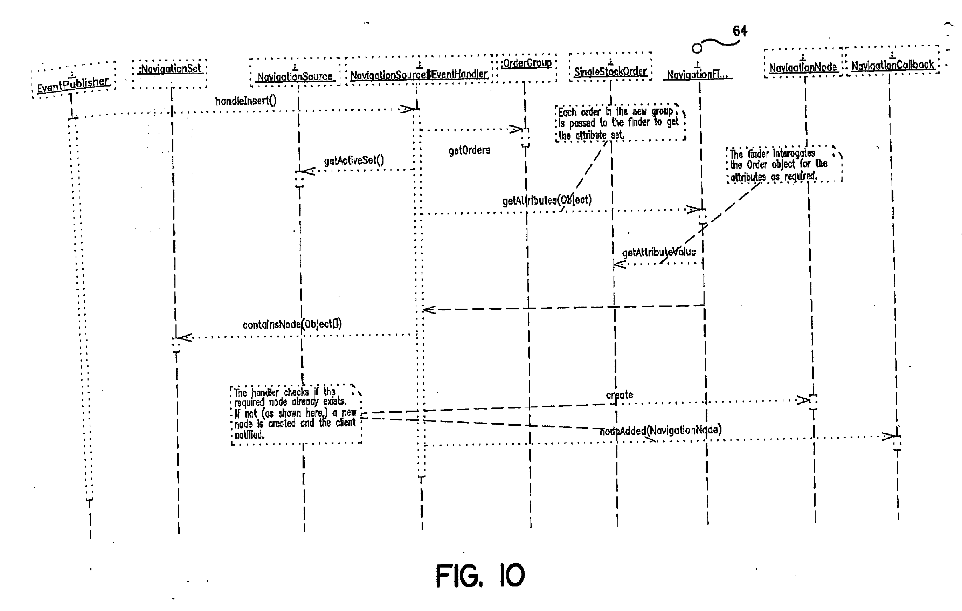

Referring to FIG. 10, the diagram shows the update process in the case where an object (an order in this case) is added. In this example, the addition of a new object causes a new navigation tree node to be added to the tree structure; if it already existed this step is not required. We note that in the same way that the static behavior (a.k.a. tree construction) is generic, the event handling is also non-specific as to object type, that is, it is up to the concrete finder instance to provide support for the necessary object type, in this case, the order set finder provides this facility.

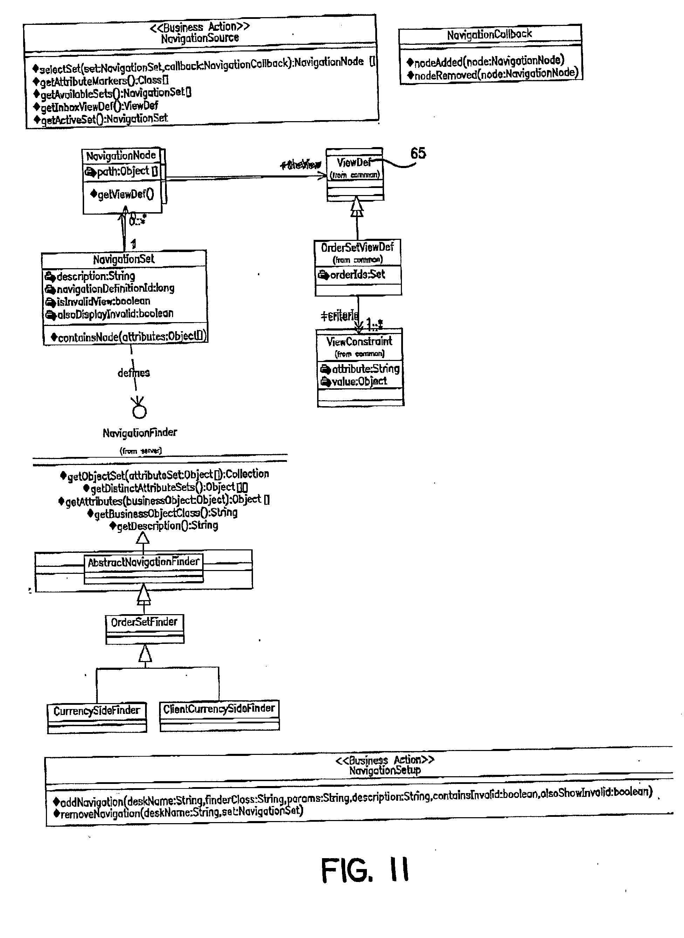

Referring to FIG. 11, the diagram shows the internal design of how a navigation source is constructed and what interface it expresses to the user applications, The diagram also shows how a navigation set is related to the other objects in the system and how the navigation finder is built up on the basis of a number of abstract base classes. The finder interface itself deals in terms of objects, hence the surrounding infrastructure can be used for any data type. To break down the complexity of building navigation finders, much of the event handling code is provided in generic form in the abstract base classes. As the system is extended to directly support other object types, the hierarchy will enable new finders to be created (and maintained) with minimum effort. Each navigation node has a vicwdef **65** which contains enough information for the table subsystem to initialize a view which contains the objects appropriate to that node.

It will be appreciated that the present invention may take forms other than those specifically described herein, and the scope of the invention is to be determined solely by the following claims.

## Claims

1. A method for creating a tree having a plurality of nodes and a plurality of objects associated therewith, each object having a plurality of attributes, said method comprising the steps of:
selecting, by a user, the attributes in accordance with the user's preference; and
creating the tree in accordance with the selected attributes.

2. A method according to Claim 1, further comprising the step of displaying the tree.

3. A method according to Claim 2, wherein when one of the tree nodes is selected by the user, all of the objects associated with at least that node are also displayed.

4. A method according to Claim 1, further comprising the step of associating a new object with one of the tree nodes.

5. A method according to Claim 1, further comprising the step of associating a modified object with one of the tree nodes.

6. A method according to Claim 1, wherein a node is added to the tree when an object requiring that node has been added or modified.

7. A method according to Claim 1, wherein a node is deleted when objects requiring that node no longer exist.

8. A method according to Claim 1, wherein the user selects a node to operate upon the objects associated with the selected node.

9. A method according to Claim 8, wherein the user selects two or more nodes to operate upon all objects associated with the selected nodes.

10. A method associated with Claim 1, wherein the attributes may be inherent or derived

11. A method for displaying a plurality of objects of a tree having a plurality of nodes, said method comprising the steps of;
associating the plurality of objects with the node, each object having a plurality of attributes, wherein the objects associated with any one of the nodes is a superset of objects associated with lower nodes; and
applying a filter to each lower node in successive fashion so that only those objects contained in a higher node that have an attribute matching the node-attribute are displayed.
